# EUROPÄISCHE PATENTSCHRIFT

(11) **EP 3 621 723 B1**
(45) Veröffentlichungstag und Bekanntmachung des Hinweises auf die Patenterteilung: **20.12.2023**
(21) Anmeldenummer: 18723529.6
(22) Anmeldetag: 09.05.2018
(51) Int. Cl.: B01F 27/072, B01F 27/1123, B01F 27/921, B01F 27/96, B01F 35/93, B01J 19/00, B01J 19/18

(54) **RÜHRORGANVORRICHTUNG**
STIRRING ELEMENT DEVICE
DISPOSITIF D'ORGANE D'AGITATION

(30) Priorität: 10.05.2017 DE 102017110079
(43) Veröffentlichungstag der Anmeldung: 18.03.2020
(73) Patentinhaber: EKATO Rühr- und Mischtechnik GmbH, 79650 Schopfheim (DE)
(72) Erfinder: ROHN, Nicole, 79618 Rheinfelden (DE); BECK, Horst, 79650 Schopfheim (DE); SCHMIDT, Reinhard, 79689 Maulburg (DE)
(74) Vertreter: Daub, Thomas
(86) Internationale Anmeldenummer: PCT/EP2018/062118
(87) Internationale Veröffentlichungsnummer: WO 2018/206710

(56) Entgegenhaltungen:
- EP-A1- 2 781 254
- EP-A2- 0 063 171
- CN-A- 1 562 487
- CN-A- 103 007 810
- CN-A- 103 007 810
- CN-U- 202 161 999
- CN-U- 202 161 999
- CN-U- 202 741 122
- CN-U- 202 741 122
- DE-B- 1 138 378
- DE-B- 1 138 378
- FR-A1- 2 893 517
- GB-A- 411 763
- GB-A- 1 136 116
- GB-A- 1 136 116
- JP-A- H10 265 226
- US-A- 1 457 848
- US-A- 1 457 848
- US-A- 1 734 632
- US-A- 2 778 922
- US-A1- 2004 233 780

## Beschreibung

### Stand der Technik

Die Erfindung betrifft eine Rührorganvorrichtung nach dem Oberbegriff des Anspruchs 1.

Es sind bereits Rührorganvorrichtungen mit inneren und äußeren Rührblättern vorgeschlagen worden. Die japanische Druckschrift JP1996150330 offenbart ein Rührorgan mit einem helixförmigen inneren Rührblatt, welches eine Bewegung eines zu mischenden Mediums von unten nach oben erzeugt und mit zwei äußeren, relativ zu einer Rotationsachse angewinkelten, Rührblättern, welche eine Bewegung eines zu mischenden Mediums von oben nach unten erzeugen. Hierbei umschlingt die Helix die Rotationsachse mehrfach und erstreckt sich über einen Bereich um die Rotationsachse welcher 360° beträgt.

Ferner ist aus der DE 11 38 378 B eine Rührorganvorrichtung nach dem Oberbegriff des Anspruchs 1 bekannt.

Die Aufgabe der Erfindung besteht insbesondere darin, eine gattungsgemäße Vorrichtung mit verbesserten Rühreigenschaften bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Rührorganvorrichtung, insbesondere zum Mischen von Medien in einem breiten Viskositätsbereich, insbesondere für einen Polykondensations-Reaktor, mit zumindest einem inneren Rührblatt und zumindest einem äußeren Rührblatt, welche um eine gemeinsame Rotationsachse rotierbar sind, wobei zumindest das innere Rührblatt zumindest abschnittsweise relativ zur Rotationsachse angestellt ist.

Es wird vorgeschlagen, dass zumindest das innere Rührblatt vollständig in einem Teilbereich um die Rotationsachse angeordnet ist, welcher einem Zylindersektor mit einem Kreissektor von weniger als 360°, insbesondere von weniger als 180° und vorzugsweise von weniger als 90° als Grundfläche entspricht. Dadurch können vorteilhaft verbesserte Rühreigenschaften erreicht werden. Vorteilhaft kann eine gute Durchmischbarkeit eines zu mischenden Mediums, insbesondere über einen gesamten durch die Rührorganvorrichtung in einem Rotationsbetrieb überstrichenen Volumenbereich, ermöglicht werden. Vorteilhaft kann eine axiale Strömung, insbesondere eine Vertikalströmung parallel zu der Rotationsachse in einem inneren Bereich optimiert werden, wodurch eine Zirkulation des zu mischenden Mediums, insbesondere im Zentralbereich nahe der Rotationsachse, vorteilhaft weiter verbessert werden kann. Außerdem können, insbesondere mittels der auf einen Zylindersektor beschränkten Ausführung des inneren Rührblatts, vorteilhaft Bereiche, welche die Vertikalströmung behindern können, beispielsweise durch teilweise senkrecht zu der erzeugten Vertikalströmung stehende Flächen, vermieden werden.

Unter einem "breiten Viskositätsbereich" soll insbesondere ein Bereich von Viskositäten verstanden werden, welcher sich zumindest über 200 Pas, vorzugsweise zumindest über 400 Pas und bevorzugt zumindest über 600 Pas erstreckt. Besonders bevorzugt erstreckt sich der Bereich von Viskositäten zumindest von 5 Pas bis 750 Pas. Unter einem "Rührblatt" soll insbesondere ein Teil der Rührorganvorrichtung verstanden werden, welches eine kontinuierliche Fläche aufweist, welche insbesondere dazu vorgesehen ist ein zu mischendes Medium, welches bei einer Rotation des Rührblatts um die Rotationsachse auf eine, als Oberfläche des Rührblatts ausgebildete, Rührfläche auftrifft, zu beschleunigen. Jedes Rührblatt der Rührorganvorrichtung ist insbesondere zumindest im Wesentlichen schalenartig und/oder einstückig ausgebildet. Vorzugsweise weist das Rührblatt eine zusammenhängende, vorzugsweise von Ausnehmungen und/oder Unterbrechungen freie Oberfläche, insbesondere Rührfläche, auf. Insbesondere ist das Rührblatt dazu vorgesehen bei einer Rotation um die Rotationsachse eine Strömung in einem zu mischenden Medium zu erzeugen.

Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Darunter, dass ein Rührblatt "relativ zur Rotationsachse angestellt" ist, soll insbesondere verstanden werden, dass das Rührblatt, insbesondere die Rührfläche, zumindest eine Tangentialebene aufweist, die zumindest eine Flächennormale umfasst, die mit der Rotationsachse einen Anstellwinkel kleiner als 90°, vorzugsweise kleiner als 89° oder bevorzugt kleiner als 87° einschließt. Unter einem "Anstellwinkel" soll insbesondere ein Winkel verstanden werden, welcher zumindest eine Flächennormale zumindest einer Tangentialebene, welche an einem Flächenpunkt eines Bauteils, beispielsweise der Rührfläche des Rührblatts, anliegt, mit der Rotationsachse einschließt. Insbesondere liegt ein kleinster Anstellwinkel des inneren Rührblatts, insbesondere der Rührfläche des inneren Rührblatts, in einem Bereich zwischen 50° und 90°, vorzugsweise zwischen 60° und 90°, bevorzugt zwischen70° und 90° oder besonders bevorzugt zwischen 80° und 90°. Insbesondere liegt ein kleinster Anstellwinkel des äußeren Rührblatts, insbesondere der Rührfläche des äußeren Rührblatts, in einem Bereich zwischen 10° und 90°, vorzugsweise zwischen 20° und 90°, bevorzugt zwischen 30° und 90° oder besonders bevorzugt zwischen 40° und 90°. Vorzugsweise ist eine Zylinderachse des Zylindersektors identisch mit der Rotationsachse ausgebildet.

Die Rührorganvorrichtung weist zumindest ein korrespondierendes inneres Rührblatt auf, welches vollständig in einem korrespondierenden Teilbereich um die Rotationsachse angeordnet ist, welcher einem korrespondierenden Zylindersektor mit einem Kreissektor als Grundfläche entspricht, wobei der Teilbereich und der korrespondierende Teilbereich überlappungsfrei sind. Dadurch können Rühreigenschaften weiter verbessert werden. Vorteilhaft kann eine gute Durchmischbarkeit eines zu mischenden Mediums, insbesondere über einen gesamten durch die Rührorganvorrichtung in einem Rotationsbetrieb überstrichenen Volumenbereich, ermöglicht werden. Vorteilhaft kann eine axiale Strömung, insbesondere eine Vertikalströmung parallel zu der Rotationsachse in einem inneren Bereich optimiert werden, wodurch eine Zirkulation des zu mischenden Mediums, insbesondere im Zentralbereich nahe der Rotationsachse, vorteilhaft weiter verbessert werden kann. Zudem kann mittels des korrespondierenden Rührblatts vorteilhaft eine Masseverteilung der Rührorganvorrichtung optimiert werden, wodurch ein Rundlauf der Rührorganvorrichtung verbessert werden kann.

Insbesondere sind das innere Rührblatt und das korrespondierende innere Rührblatt zumindest im Wesentlichen identisch ausgebildet, wobei insbesondere das korrespondierende innere Rührblatt in Relation zu dem inneren Rührblatt um einen Winkel, welcher vorzugsweise 180° beträgt, verdreht angeordnet ist. Unter "im Wesentlichen identisch" soll insbesondere deckungsgleich und/oder kongruent verstanden werden, insbesondere unter Vernachlässigung von kleinen, insbesondere in einem fertigungsbedingten Toleranzbereich liegenden, Formabweichungen. Vorzugsweise ist eine Zylinderachse des korrespondierenden Zylindersektors identisch mit der Rotationsachse ausgebildet. Es ist vorstellbar, dass zwischen dem Teilbereich und dem korrespondierenden Teilbereich zumindest ein erster Teilbereich und/oder zumindest ein zweiter Teilbereich um die Rotationsachse existiert, welcher jeweils einem Zylindersektor mit einem Kreissektor von weniger als 360°, insbesondere von weniger als 180° und vorzugsweise von weniger als 90° als Grundfläche entspricht, wobei der Teilbereich, der korrespondierende Teilbereich, und zumindest der erste Teilbereich und/oder der zweite Teilbereich überlappungsfrei sind. Vorzugsweise weisen der erste Teilbereich und der zweite Teilbereich zueinander kongruente Grundflächen auf. Insbesondere entspricht die Grundfläche des ersten Teilbereichs und des zweiten Teilbereichs einem Kreissektor von mehr als 45°, vorzugsweise von mehr als 70°, vorteilhaft von mehr als 100°, bevorzugt von mehr als 120° und insbesondere von weniger als 130°.

Zudem wird vorgeschlagen, dass die Rührorganvorrichtung eine um die Rotationsachse zentrierte Rotationswelle aufweist, welche zumindest abschnittsweise das innere Rührblatt entlang einer Längsrichtung der Rotationswelle kontaktiert. Dadurch kann eine vorteilhafte Kraftübertragung erreicht werden. Vorteilhaft kann eine, insbesondere durch das zu rührende Medium erzeugte, Gegenkraft über mehrere Kontaktbereiche und/oder über einen ausgedehnten Kontaktbereich verteilt werden, wodurch vorteilhaft eine leichtere Bauweise ermöglicht werden kann. Vorteilhaft können zudem Toträume, insbesondere zwischen der Rotationswelle und dem inneren Rührblatt, in denen das zu rührende Medium in einem Rührbetrieb im Wesentlichen stillsteht, vermieden werden. Die Rotationswelle ist insbesondere rotationssymmetrisch ausgebildet. Insbesondere ist die Rotationswelle um die Rotationsachse zentriert, wobei eine Rotationssymmetrieachse der Rotationswelle identisch ist mit der Rotationsachse. Insbesondere kontaktiert das innere Rührblatt, vorzugsweise eine Kante der Rührfläche des inneren Rührblatts, und/oder das korrespondierende innere Rührblatt, vorzugsweise eine Kante der Rührfläche des korrespondierenden inneren Rührblatts, die Rotationswelle direkt, insbesondere frei von Tragarmen und/oder separaten Verbindungselementen. Insbesondere ist die Rotationswelle einstückig mit dem inneren Rührblatt und/oder dem korrespondierenden inneren Rührblatt ausgebildet.

Weiterhin wird vorgeschlagen, dass das äußere Rührblatt vollständig in einem weiteren Teilbereich um die Rotationsachse angeordnet ist, welcher einem weiteren Zylindersektor mit einem Kreissektor von weniger als 360°, insbesondere von weniger als 180° und vorzugsweise von weniger als 90°als Grundfläche entspricht. Dadurch können besonders vorteilhafte Rühreigenschaften bereitgestellt werden. Vorteilhaft kann eine gute Durchmischbarkeit eines zu mischenden Mediums, insbesondere über einen gesamten durch die Rührorganvorrichtung in einem Rotationsbetrieb überstrichenen Volumenbereich, ermöglicht werden. Vorteilhaft kann eine axiale Strömung, insbesondere eine Vertikalströmung parallel zu der Rotationsachse in einem Bereich außerhalb des Zentrums optimiert werden, wodurch eine Zirkulation des zu mischenden Mediums weiter vorteilhaft verbessert werden kann.

Insbesondere ist das äußere Rührblatt in radialer Richtung von der Rotationsachse beabstandet. Vorzugsweise ist ein Abstand des äußeren Rührblatts von der Rotationsache in jedem Punkt größer als ein Abstand des inneren Rührblatts und/oder des korrespondierenden inneren Rührblatts in jedem Punkt. Insbesondere sind bei einem Rotationsbetrieb durch die inneren Rührblätter überstrichene Bereiche überlappungsfrei mit einem durch das äußere Rührblatt überstrichenen Bereich. Vorzugsweise ist das äußere Rührblatt relativ zur Rotationsachse angestellt. Insbesondere weist die Rührorganvorrichtung zumindest ein korrespondierendes äußeres Rührblatt auf, welches vollständig in einem weiteren korrespondierenden Teilbereich um die Rotationsachse angeordnet ist, welcher einem weiteren korrespondierenden Zylindersektor mit einem Kreissektor als Grundfläche entspricht, wobei der weitere Teilbereich und der weitere korrespondierende Teilbereich überlappungsfrei sind. Es ist denkbar, dass der weitere Teilbereich und/oder der weitere korrespondierende Teilbereich überlappungsfrei mit dem Teilbereich und/oder dem korrespondierenden Teilbereich sind oder, dass sich die Teilbereiche zumindest teilweise gegenseitig überlappen. Zudem ist vorstellbar, dass der weitere Teilbereich mit dem Teilbereich und/oder der weitere korrespondierende Teilbereich mit dem korrespondierenden Teilbereich identisch ist. Das äußere und/oder das korrespondierende äußere Rührblatt ist insbesondere mittels zumindest eines Tragarms der Rührorganvorrichtung mit der Rührwelle verbunden. Vorzugsweise ist das äußere und/oder das korrespondierende äußere Rührblatt an zumindest einem, vorzugsweise in einem Betriebszustand in Vertikalrichtung oberen, Ende an dem Tragarm, insbesondere kraft-, form- und/oder stoffschlüssig befestigt.

Wenn das innere Rührblatt und das äußere Rührblatt, insbesondere alle Rührblätter, in zumindest einem Rotationsbetrieb identische Winkelgeschwindigkeiten aufweisen, kann eine vorteilhaft einfache Konstruktion ermöglicht werden. Vorteilhaft kann ein einzelner Antrieb zur Erzeugung der Rotationsbewegung des inneren und des äußeren Rührblatts, vorzugsweise aller Rührblätter, verwendet werden. Zudem kann vorteilhaft eine gleichmäßige Zirkulation erreicht werden. Insbesondere sind die Winkelgeschwindigkeiten des inneren Rührblatts und des äußeren Rührblatts an eine Winkelgeschwindigkeit der Rotationswelle gekoppelt, welche insbesondere variabel einstellbar sein kann. Insbesondere sind alle Rührblätter, vorzugsweise mittels der Rotationswelle und/oder zumindest eines Tragarms starr miteinander verbunden.

Des Weiteren wird vorgeschlagen, dass das innere Rührblatt und das äußere Rührblatt unterschiedlich gekrümmt sind. Dadurch kann vorteilhaft eine unterschiedliche Strömungsrichtung in verschiedenen Teilbereichen des zu mischenden Mediums erzeugt werden, wodurch vorteilhafte Rühreigenschaften bereitgestellt werden können. Vorteilhaft kann im Rührbetrieb eine verbesserte Zirkulation eines zu mischenden Mediums erreicht werden. Unter "unterschiedlich gekrümmt" soll insbesondere verstanden werden, dass sich die Krümmungen, vorzugsweise die Krümmungsrichtungen, der Rührblätter wesentlich unterscheiden. Unter sich "wesentlich unterscheidenden Krümmungen" soll insbesondere verstanden werden, dass ein Rührblatt eine, insbesondere mittlere, vorzugsweise gesamte, Richtungsänderung zwischen zwei Enden, beispielsweise einem in einem betriebsbereiten Zustand oberen Ende und einem im betriebsbereiten Zustand unteren Ende, erfährt, welche zumindest 30 %, vorzugsweise zumindest 60 %, bevorzugt zumindest 90 % oder besonders bevorzugt zumindest 120 % größer ist als eine, insbesondere mittlere, vorzugsweise gesamte, Richtungsänderung eines anderen Rührblatts. Unter sich "wesentlich unterscheidenden Krümmungsrichtungen" soll insbesondere verstanden werden, dass zumindest eins der inneren Rührblätter und/oder der äußeren Rührblätter linksgekrümmt ist, während zumindest ein von dem Rührblatt verschiedenes inneres Rührblatt und/oder äußeres Rührblatt rechtsgekrümmt ist.

Wenn das innere Rührblatt zumindest teilweise als eine um die Rotationsachse zentrierte Schraube ausgebildet ist, können im Rührbetrieb vorteilhafte Strömungsverhältnisse im zu mischenden Medium erreicht werden. Zudem kann vorteilhaft im Rührbetrieb im Bereich der Schraube eine von einer vertikalen Lage unabhängige, gleichmäßige Kraftwirkung auf das zu mischende Medium erreicht werden. Insbesondere weist das innere Rührblatt zumindest eine Oberfläche in Form einer Wendelfläche auf. Insbesondere weist das innere Rührblatt an einer inneren, im montierten Zustand der Rotationswelle nächstliegenden Kante einen Anstellwinkel von 90° auf während die der inneren Kante gegenüberliegende äußere Kante des inneren Rührblatts den kleinsten Anstellwinkel des Rührblatts aufweist. Alle Anstellwinkel des inneren Rührblatts zwischen der inneren Kante und der äußeren Kante liegen insbesondere zwischen dem kleinsten Anstellwinkel und 90°. Es ist denkbar, dass das korrespondierende innere Rührblatt zumindest teilweise als eine relativ zu dem inneren Rührblatt versetzte, um die Rotationsachse zentrierte Schraube ausgebildet ist. Insbesondere ist vorstellbar, dass das innere Rührblatt und das korrespondierende innere Rührblatt zusammen eine zweigängige Schraube, insbesondere zwei um eine halbe Ganghöhe und/oder halbe Umdrehung versetzte kongruente Helices, welche insbesondere eine identische Gängigkeit aufweisen, ausbilden. Weiterhin ist denkbar, dass das äußere Rührblatt, das korrespondierende äußere Rührblatt und/oder zumindest ein weiteres von den äußeren und inneren Rührblättern verschiedenes Rührblatt als um die Rotationsachse zentrierte Schraube ausgebildet ist, wobei die jeweilige innere, der Rotationsachse nächstliegende Kante, von der Rotationswelle beabstandet sein kann.

Ferner wird vorgeschlagen, dass das innere Rührblatt eine Ganghöhe aufweist, welche wenigstens dreimal, vorzugsweise wenigstens viermal, bevorzugt wenigstens fünfmal und besonders bevorzugt wenigstens sechsmal so groß ist wie eine Gesamterstreckung des inneren Rührblatts parallel zu der Rotationsachse. Dadurch kann vorteilhaft eine Strömung des zu mischenden Mediums optimiert werden. Vorteilhaft kann eine unterbrechungsfreie Strömung parallel zu der Rotationsachse im Bereich des inneren Rührblatts ermöglicht werden. Unter einer "Ganghöhe" soll insbesondere eine Erstreckung parallel zu der Rotationsachse verstanden werden, innerhalb der eine Schraube und/oder Helix eine volle Umdrehung zurücklegt. Insbesondere weist das korrespondierende innere Rührblatt eine zu der Ganghöhe identische korrespondierende Ganghöhe auf. Insbesondere ist die Ganghöhe über das gesamte innere Rührblatt und/oder das gesamte korrespondierende innere Rührblatt konstant. Es ist vorstellbar, dass das äußere Rührblatt, das korrespondierende äußere Rührblatt und/oder zumindest ein weiteres von den äußeren und inneren Rührblättern verschiedenes Rührblatt eine Ganghöhe aufweist, welche größer, insbesondere zumindest doppelt so groß, vorzugsweise zumindest dreimal so groß ist, als eine Gesamterstreckung des jeweiligen Rührblatts parallel zu der Rotationsachse. Insbesondere weisen das äußere Rührblatt und das korrespondierende äußere Rührblatt eine identische Ganghöhe auf. Insbesondere weist das innere Rührblatt und/oder das korrespondierende innere Rührblatt eine größere, insbesondere zumindest 20 %, vorzugsweise 30 % und besonders bevorzugt 40 % größere, Ganghöhe auf als das äußere Rührblatt, das korrespondierende äußere Rührblatt und/oder zumindest ein weiteres von den äußeren und inneren Rührblättern verschiedenes Rührblatt.

Weiterhin wird vorgeschlagen, dass die Rührorganvorrichtung zumindest ein Oberflächenrührblatt aufweist, welches in zumindest einem Betriebszustand zumindest teilweise, vorzugsweise vollständig, oberhalb des äußeren Rührblatts und/oder des inneren Rührblatts und/oder zumindest eines weiteren von den äu-βeren und inneren Rührblättern verschiedenen Rührblatts angeordnet ist. Dadurch kann vorteilhaft eine gute Durchmischung des zu mischenden Mediums erreicht werden. Vorteilhaft kann ein Totraum oberhalb des inneren und/oder des äußeren Rührblatts vermieden werden. Es ist vorstellbar, dass das Oberflächenrührblatt an eine, insbesondere vorgesehene, Füllhöhe des zu mischenden Mediums anpassbar ist. Insbesondere ist das Oberflächenrührblatt dazu vorgesehen bei einem Rührbetrieb knapp unter einer Oberfläche des zu mischenden Mediums zu rotieren, wodurch vorteilhaft ein Oberflächenaustausch des zu mischenden Mediums verbessert werden kann, was insbesondere für eine effektive Polykondensation nötig ist. Das Oberflächenrührblatt kann insbesondere abnehmbar, insbesondere von dem Tragarm abnehmbar, ausgebildet sein, wodurch vorteilhaft eine modulare Anpassbarkeit an verschiedene vorgesehen Füllstände und/oder verschiedene Behälter ermöglicht werden kann. Vorzugsweise ist das Oberflächenrührblatt relativ zu der Rotationsachse angestellt ausgebildet, wodurch vorteilhaft ein Oberflächenaustausch weiter verbessert werden kann.

Ferner wird vorgeschlagen, dass die Rührorganvorrichtung zumindest ein korrespondierendes äußeres Rührblatt und zumindest ein Ankerelement aufweist, welches zumindest das äußere Rührblatt, insbesondere an zumindest einem unteren Ende, mit dem korrespondierenden äußeren Rührblatt, insbesondere stoffschlüssig, verbindet, wobei das Ankerelement eine Ankerrührfläche aufweist, welche relativ zu der Rotationsachse ausgerichtet ist. Dadurch können vorteilhaft Rühreigenschaften, insbesondere im Bereich eines Bodens eines Behältnisses, verbessert werden, wodurch vorteilhaft eine Gesamtrührleistung erhöht werden kann. Zudem kann vorteilhaft eine Stabilität der Rührorganvorrichtung erhöht werden. Unter einem "unteren Ende" soll insbesondere eine Kante des äußeren Rührblatts verstanden werden, welche in einem Rührbetrieb am weitesten von der Oberfläche eines zu rührenden Mediums entfernt liegt. Die Ankerrührfläche kann relativ zu der Rotationsachse senkrecht und/oder angestellt ausgerichtet sein. Unter der Wendung "relativ zu der Rotationsfläche ausgerichtet" soll insbesondere verstanden werden, dass die Ankerrührfläche eine Flächennormale aufweist, welche in einem Winkel zu der Rotationsachse steht. Insbesondere beträgt der Winkel der Flächennormale der Ankerrührfläche mit der Rotationsachse zumindest 45°, vorzugsweise zumindest 60°, bevorzugt zumindest 75° oder besonders bevorzugt zumindest 90°.

Wenn die Rotationswelle das Ankerelement kontaktiert und fest mit dem Ankerelement verbunden ist, kann vorteilhaft eine Stabilität der Rührorganvorrichtung erhöht werden, wodurch vorteilhaft eine Lebensdauer erhöht werden kann. Zudem kann vorteilhaft eine Kraftverteilung und/oder -übertragung verbessert werden, beispielsweise indem vorteilhaft an dem äußeren Rührblatt und dem korrespondierendem äußeren Rührblatt angreifende Kräfte auf mehrere Verbindungsstellen aufgeteilt werden. Insbesondere ist das Ankerelement und die Rotationswelle form-, kraft- und/oder stoffschlüssig verbunden und/oder vorteilhaft einstückig ausgebildet.

Die Rührorganvorrichtung weist zumindest ein weiteres äußeres Rührblatt auf, welches in Radialrichtung einen größeren Abstand von der Rotationsachse aufweist als das äußere Rührblatt. Dadurch kann vorteilhaft ein durch die Rührorganvorrichtung durchmischbarer Bereich vergrößert werden, wodurch vorteilhaft eine größere Menge des zu mischenden Mediums gleichzeitig mischbar ist. Dadurch kann vorteilhaft eine Effizienz gesteigert werden. Vorzugsweise ist ein Abstand des weiteren äußeren Rührblatts von der Rotationsache in jedem Punkt größer als ein Abstand des äußeren Rührblatts und/oder des korrespondierenden äußeren Rührblatts in jedem Punkt. Insbesondere sind bei einem Rotationsbetrieb durch das weitere äußere Rührblatt überstrichene Bereiche überlappungsfrei mit einem durch das äußere Rührblatt und/oder das korrespondierende äußere Rührblatt überstrichenen Bereich. Vorzugsweise ist das weitere äußere Rührblatt relativ zur Rotationsachse angestellt. Insbesondere weist die Rührorganvorrichtung zumindest ein korrespondierendes weiteres äußeres Rührblatt auf, welches im Rotationsbetrieb einen zumindest im Wesentlichen identischen Bereich überstreicht wie das weitere äußere Rührblatt. Das weitere äußere und/oder das weitere korrespondierende äußere Rührblatt ist insbesondere mittels des Tragarms mit der Rührwelle verbunden. Vorzugsweise ist das äußere und/oder das korrespondierende äußere Rührblatt an zumindest einem, vorzugsweise in einem Betriebszustand in Vertikalrichtung oberen, Ende an dem Tragarm, insbesondere kraft-, form- und/oder stoffschlüssig befestigt. Vorzugsweise weist das weitere äußere Rührblatt und/oder das weitere korrespondierende äußere Rührblatt eine helixförmige Krümmung auf. Insbesondere besitzen das weitere äußere Rührblatt und das korrespondierende weitere äußere Rührblatt eine identische Gängigkeit und/oder Krümmung.

Ferner wird vorgeschlagen, dass entlang der Rotationsachse betrachtet das äußere Rührblatt eine der Krümmungsrichtung des weiteren äußeren Rührblatts entgegengesetzte Krümmungsrichtung aufweist. Dadurch können vorteilhaft Rühreigenschaften verbessert werden, insbesondere hinsichtlich einer Zirkulation in einem, insbesondere äußeren, Bereich zwischen den äußeren Rührblättern und den weiteren äußeren Rührblättern. Insbesondere ist das weitere äußere Rührblatt und/oder das korrespondierende weitere äußere Rührblatt zumindest teilweise als rechtsgängige Helix ausgebildet und das äußere Rührblatt und/oder das korrespondierende äußere Rührblatt als zumindest teilweise linksgängige Helix ausgebildet.

Alternativ ist vorstellbar, dass das weitere äußere Rührblatt und/oder das korrespondierende weitere äußere Rührblatt eine identische Krümmung und/oder Gängigkeit aufweist wie das äußere Rührblatt und/oder das korrespondierende äußere Rührblatt. Dadurch können vorteilhaft Rühreigenschaften verbessert werden, insbesondere hinsichtlich einer Zirkulation in einem, insbesondere inneren, Bereich zwischen den äußeren Rührblättern und den inneren Rührblättern. Insbesondere sind das weitere äußere Rührblatt, das korrespondierende weitere äußere Rührblatt, das äußere Rührblatt und/oder das korrespondierende äußere Rührblatt als zumindest teilweise rechtsgängige Helix ausgebildet.

Zudem wird vorgeschlagen, dass ein durch das äußere Rührblatt bei einem Rotationsbetrieb überstrichener Bereich und ein durch das weitere äußere Rührblatt bei einem Rotationsbetrieb überstrichener weiterer Bereich, unter Ausbildung eines Zwischenraums, welcher zur Aufnahme eines, insbesondere zur Rotationsachse im Wesentlichen radialsymmetrisch ausgebildeten, Heiz- und/oder Kühlregisters vorgesehen ist, radial voneinander beabstandet sind. Dadurch können vorteilhaft für eine Temperierung vorteilhafte Strömungsverhältnisse geschaffen werden, beispielsweise indem eine Zirkulationsströmung im Rotationsbetrieb auf einer Seite des Zwischenraums zumindest teilweise vertikal nach oben verläuft und auf einer gegenüberliegenden Seite zumindest teilweise vertikal nach unten verläuft. Dadurch kann vorteilhaft eine Temperierung des zu mischenden Mediums optimiert und/oder vereinfacht werden. Insbesondere ist der Zwischenraum in jeder Winkellage des Rotationsbetriebs frei von Bedeckungen durch Teile der Rührorganvorrichtung, insbesondere Rührblättern.

Erfindungsgemäss weist das weitere äußere Rührblatt ein zu einer Spitze zulaufendes freies Ende auf. Dadurch kann vorteilhaft eine bei dem Rotationsbetrieb durch die Rührblätter, insbesondere das weitere äußere Rührblatt, überstrichener Bereich optimiert werden. Vorteilhaft können Toträume vermieden werden. Vorteilhaft kann ein Mischen des zu mischenden Mediums in der Nähe einer Behälterwand optimiert werden.

Darüber hinaus wird vorgeschlagen, dass das innere Rührblatt und/oder das korrespondierende innere Rührblatt zumindest eine Ausnehmung aufweist. Unter einer "Ausnehmung" soll insbesondere ein Teilbereich des inneren Rührblatts verstanden werden, welcher ein Volumen definiert, welches frei von Material des inneren Rührblatts ist und innerhalb einer kleinstmöglichen konvexen Hülle angeordnet ist, welche das innere Rührblatt gerade noch umfasst. Beispielsweise kann die Ausnehmung zumindest eine Vertiefung und/oder Prägung des inneren Rührblatts aufweisen. Bevorzugt ist die Ausnehmung als ein Durchbruch des inneren Rührblatts ausgebildet. Vorteilhaft weist das innere Rührblatt und/oder das korrespondierende innere Rührblatt eine Vielzahl von identischen, vorzugsweise periodisch angeordneten Ausnehmungen auf. Hierdurch kann insbesondere eine flexible Ausgestaltung des inneren Rührblatts und/oder des korrespondierenden inneren Rührblatts ermöglicht werden. Vorteilhaft kann das innere Rührblatt und/oder das korrespondierende innere Rührblatt an eine Verwendung in einem bestimmten Viskositätsbereich angepasst ausgestaltet werden.

Zudem wird vorgeschlagen, dass das Ankerelement entlang seiner Haupterstreckungsrichtung gekrümmt ausgebildet ist. Unter einer "Haupterstreckungsrichtung" eines Objekts soll dabei insbesondere eine Richtung verstanden werden, welche parallel zu einer längsten Kante eines kleinsten geometrischen Quaders verläuft, welcher das Objekt gerade noch vollständig umschließt. Insbesondere weist eine Krümmung des Ankerelements zumindest einen Wendepunkt auf. Unter einem "Wendepunkt" soll in diesem Kontext ein Punkt verstanden werden, an dem die Krümmung des Ankerelements einen Richtungswechsel durchführt. Bevorzugt ist das Ankerelement s-förmig gekrümmt. Besonders bevorzugt liegt der Wendepunkt der Krümmung des Ankerelements auf der Rotationsachse. Insbesondere weist die Krümmung des Ankerelements einen Krümmungswinkel von zumindest 5°, vorteilhaft von zumindest 10°, besonders vorteilhaft von zumindest 15° und bevorzugt von zumindest 20° auf. Unter einem "Krümmungswinkel" soll in diesem Kontext insbesondere ein Winkel verstanden werden, welchen eine erste Gerade, welche entlang einer Ausrichtung eines äußeren Endes des Ankerelements verläuft, mit einer zweiten Gerade aufspannt, welche entlang einer Ausrichtung des Ankerelements am Wendepunkt verläuft. Hierdurch können insbesondere Rühreigenschaften, insbesondere im Bereich des Bodens des Behältnisses, weiter verbessert werden. Vorteilhaft kann eine Gesamtrührleistung der Rührorganvorrichtung verbessert werden.

Vorteilhaft weist die Rührorganvorrichtung zumindest ein am Ankerelement und/oder am äußeren Rührblatt angeordnetes Schaufelelement auf. Unter einem "Schaufelelement" soll insbesondere ein Element verstanden werden, welches zumindest einen Teil einer Schaufel ausbildet. Unter einer "Schaufel" soll insbesondere ein zusammenhängender Teilbereich der Rührorganvorrichtung verstanden werden, welcher zumindest eine zusammenhängende Oberfläche definiert, die während einer Rotationsbewegung der Rührorganvorrichtung eine Verdrängung des zu mischenden Mediums bereitstellt. Insbesondere kann die Oberfläche gekrümmt, vorteilhaft konkav gekrümmt, sein. Bevorzugt bildet das Schaufelelement gemeinsam mit zumindest einem Teilbereich zumindest eines der Rührblätter die Schaufel aus. Insbesondere ist das Schaufelelement plattenartig ausgebildet. Vorteilhaft verläuft eine Haupterstreckungsrichtung des Schaufelelements zumindest im Wesentlichen senkrecht zu einer Haupterstreckungsrichtung des Ankerelements. Unter einem "plattenartigen Objekt" soll insbesondere ein Objekt verstanden werden, dessen kleinster geometrischer Quader, welcher das Objekt gerade noch vollständig umschließt, eine Dicke aufweist, die maximal 50 %, insbesondere maximal 20 %, vorteilhaft maximal 10 % und vorzugsweise maximal 5 % einer Länge und/oder einer Breite des Quaders ist. Der Ausdruck "zumindest im Wesentlichen senkrecht" soll hier insbesondere eine Ausrichtung einer Richtung relativ zu einer Bezugsrichtung definieren, wobei die Richtung und die Bezugsrichtung, insbesondere in einer Ebene betrachtet, einen Winkel von 90° einschließen und der Winkel eine maximale Abweichung von insbesondere kleiner als 45°, vorteilhaft kleiner als 35°, besonders vorteilhaft kleiner als 25° und bevorzugt kleiner als 20° aufweist. Bevorzugt ist das Schaufelelement fest mit dem Ankerelement und/oder dem äußeren Rührblatt verbunden. Besonders bevorzugt ist das Schaufelelement einstückig mit dem Ankerelement und/oder dem äußeren Rührblatt ausgebildet, insbesondere ist das Schaufelelement mit dem Ankerelement und/oder dem äußeren Rührblatt verschweißt. Alternativ könnte das Schaufelelement mit dem Ankerelement und/oder dem äußeren Rührblatt verklebt und/oder verschraubt und/oder vernietet sein. Insbesondere ist das Schaufelelement aus einem zu einem Material des Ankerelements und/oder des äußeren Rührblatts identischen Material gebildet. Alternativ könnte das Schaufelelement aus einem zu dem Material des Ankerelements und/oder des äußeren Rührblatts verschiedenen Material gebildet sein. Besonders bevorzugt ist das Schaufelelement an einem zu der Rotationsachse maximal beabstandeten Teilbereich des Ankerelements mit dem Ankerelement verbunden. Insbesondere ist das Schaufelelement mit einem äußeren, vorteilhaft in Richtung der Rotationsachse gekrümmten, Rand des Ankerelements verbunden. Vorteilhaft ist das Schaufelelement zumindest im Wesentlichen dreieckig ausgebildet. Unter "zumindest im Wesentlichen dreieckig" soll insbesondere verstanden werden, dass eine Projektionsfläche des Objekts auf seine Haupterstreckungsebene zumindest zu 70 %, vorteilhaft zumindest zu 80 %, besonders vorteilhaft zumindest zu 90 % und bevorzugt vollständig deckungsgleich mit zumindest einem geometrischen Dreieck ist. Alternativ könnte das Schaufelelement zumindest im Wesentlichen teilkreisförmig ausgebildet sein. Insbesondere ist eine erste Seite des Schaufelelements zu einem Großteil, bevorzugt vollständig, mit dem Ankerelement und/oder dem äußeren Rührblatt verbunden. Bevorzugt bildet das Schaufelelement gemeinsam mit einem Teilbereich des Ankerelements und einem Teilbereich des äußeren Rührblatts die Schaufel aus. Vorteilhaft weist die Rührorganvorrichtung ein weiteres Schaufelelement auf, welches mit einem gegenüberliegenden weiteren Teilbereich des Ankerelements und/oder mit dem korrespondierenden äußeren Rührblatt verbunden ist. Hierdurch können insbesondere vorteilhafte Strömungseigenschaften der Rührorganvorrichtung erreicht werden. Vorteilhaft kann eine geringe Überströmung des Ankerelements erreicht werden.

Zudem wird ein System, insbesondere Rühr- und/oder Reaktorsystem, mit einer Rührorganvorrichtung und mit einem Behälter, welcher die Rührorganvorrichtung zumindest teilweise umgreift vorgeschlagen. Insbesondere sind der Behälter und die Rührorganvorrichtung in ihren Dimensionen aufeinander abgestimmt. Vorzugsweise entspricht ein bei dem Rotationsbetrieb durch die Rührblätter beschriebener Bereich im Wesentlichen einem Innenmaß des durch das zu mischende Medium gefüllten Behälters. Darunter, dass der Behälter die Rührorganvorrichtung "zumindest teilweise umgreift" soll insbesondere verstanden werden, dass zumindest 80 %, vorzugsweise zumindest 90 % oder bevorzugt 100 % der Rührorganvorrichtung in einem montierten Zustand von dem Behälter umgeben sind. Mittels eines derartigen Systems können vorteilhaft vorteilhafte Rühreigenschaften bereitgestellt werden, insbesondere zum Mischen eines Inhalts eines Polykondensations-Reaktors.

Vorteilhaft umfasst das System das Heiz- und/oder Kühlregister, wobei zumindest das äußere Rührblatt und zumindest das weitere äußere Rührblatt in zumindest einem Betriebszustand das Heiz- und/oder Kühlregister auf zumindest zwei voneinander verschiedenen Seiten umkreisen. Dadurch kann vorteilhaft eine Temperierung des zu mischenden Mediums in dem Behälter optimiert werden. Vorteilhaft kann eine durch das Heiz- und/oder Kühlregister auf das zu mischende Medium übertragene thermische Energie besonders homogen in dem Behälter verteilt werden. Dadurch können vorteilhaft gleiche chemische Reaktionsbedingungen in dem gesamten Behältervolumen ermöglicht werden. Unter "umkreisen" soll insbesondere verstanden werden, dass ein Rührblatt einen Umkreis oder einen Inkreis um das Heiz- und/oder Kühlregister beschreibt. Insbesondere beschreibt das weitere äußere Rührblatt und/oder das korrespondierende weitere äußere Rührblatt einen Umkreis um das Heiz- und/oder Kühlregister während das äußere Rührblatt und/oder das korrespondierende äußere Rührblatt einen Inkreis um das Kühl- und/oder Heizregister beschreiben.

Die erfindungsgemäße Rührorganvorrichtung soll hierbei nicht auf die oben beschriebene Anwendung und Ausführungsform beschränkt sein. Insbesondere kann die erfindungsgemäße Rührorganvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen sind drei Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Draufsicht auf eine Rührorganvorrichtung,
- Fig. 2: eine schematische, seitliche Ansicht der Rührorganvorrichtung,
- Fig. 3: eine weitere schematische seitliche Ansicht der Rührorganvorrichtung,
- Fig. 4: eine schematische, perspektivische Ansicht der Rührorganvorrichtung,
- Fig. 5: eine schematische seitliche Ansicht eines Systems mit der Rührorganvorrichtung, mit einer Antriebswelle und mit einem geschnittenen Behälter mit einem geschnittenen Heiz- und/oder Kühlregister,
- Fig. 6: eine schematische Draufsicht auf eine alternative Rührorganvorrichtung,
- Fig. 7: eine schematische, perspektivische Ansicht der alternativen Rührorganvorrichtung,
- Fig. 8: einen Ausschnitt einer schematischen seitlichen Ansicht einer weiteren alternativen Rührorganvorrichtung,
- Fig. 9: eine schematische Draufsicht auf eine weitere alternative Rührorganvorrichtung,
- Fig. 10: eine schematische, perspektivische Ansicht der weiteren alternativen Rührorganvorrichtung und
- Fig. 11: eine schematische Draufsicht auf eine weitere alternative Rührorganvorrichtung.

### Beschreibung der Ausführungsbeispiele

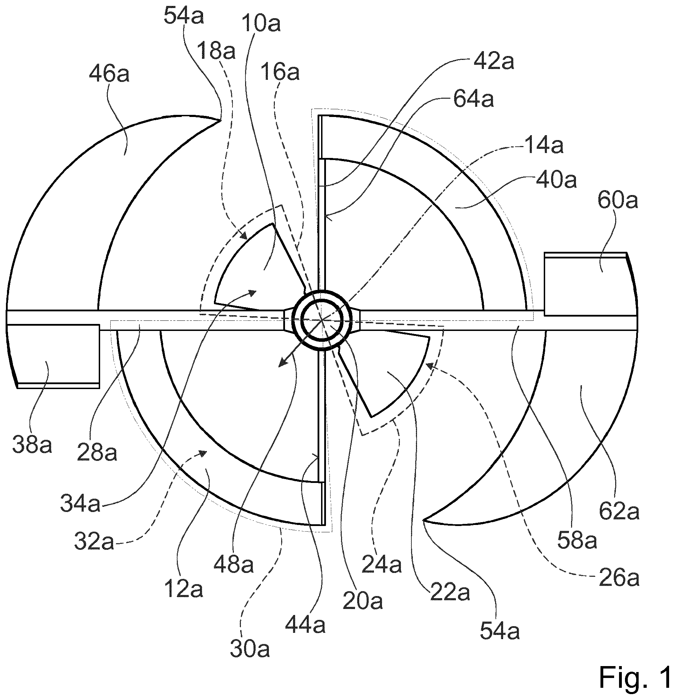

Fig. 1 zeigt eine Rührorganvorrichtung mit einem inneren Rührblatt 10a und einem korrespondierenden inneren Rührblatt 22a. Die Rührorganvorrichtung ist zum Mischen von Medien in einem breiten Viskositätsbereich, insbesondere in einem Polykondensations-Reaktor, vorgesehen. Das innere Rührblatt 10a ist vollständig in einem Teilbereich 16a um die Rotationsachse 14a angeordnet, welcher einem Zylindersektor 18a mit einem Kreissektor von weniger als 360° als Grundfläche entspricht. Das korrespondierende innere Rührblatt 22a ist vollständig in einem korrespondierenden Teilbereich 24a um die Rotationsachse 14a angeordnet, welcher einem korrespondierenden Zylindersektor 26a mit einem korrespondierenden Kreissektor von weniger als 360° als Grundfläche entspricht. Der Teilbereich 16a und der korrespondierende Teilbereich 24a sind überlappungsfrei.

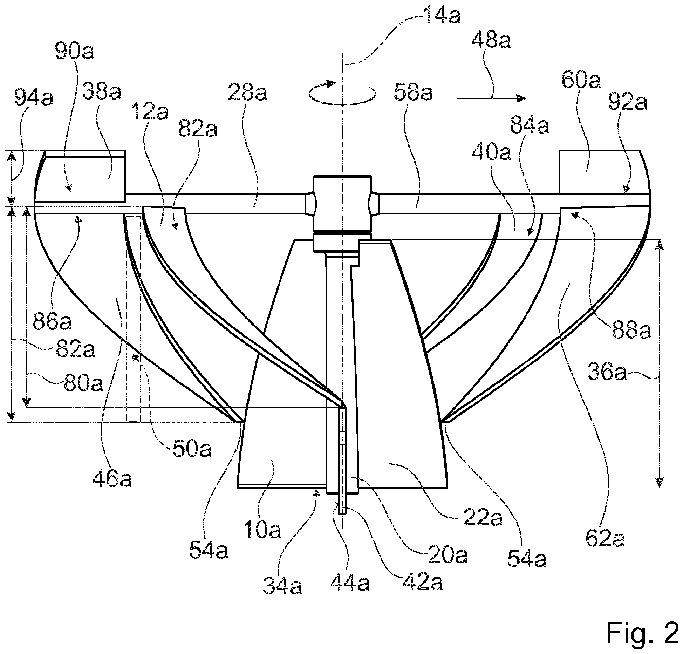

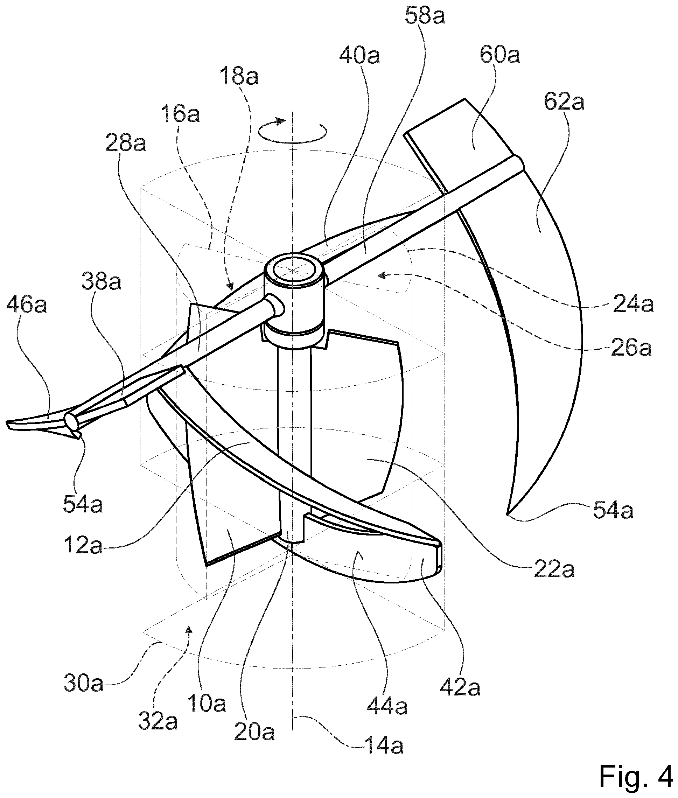

Das innere Rührblatt 10a ist relativ zu einer Rotationsachse 14a angestellt. Das korrespondierende innere Rührblatt 22a ist relativ zur Rotationsachse 14a angestellt. Ein Anstellwinkelbereich des inneren Rührblatts 10a und des korrespondierenden inneren Rührblatts 22a beträgt jeweils 60 bis 90°. Das innere Rührblatt 10a und das korrespondierende innere Rührblatt 22a sind als um die Rotationsachse 14a zentrierte Schrauben 34a ausgebildet (vgl. Fig. 4). Das innere Rührblatt 10a und das korrespondierende innere Rührblatt 22a sind als linksgängige Helices ausgebildet. Das innere Rührblatt 10a weist eine Ganghöhe auf, die mindestens sechsmal so groß ist wie eine Gesamterstreckung 36a des inneren Rührblatts 10a parallel zu der Rotationsachse 14a (vgl. Fig. 2). Das korrespondierende innere Rührblatt 22a weist eine identische Ganghöhe auf wie das innere Rührblatt 10a. Das korrespondierende innere Rührblatt 22a ist identisch zu dem inneren Rührblatt 10a ausgebildet und um die Rotationsachse 14a um 180° rotiert versetzt angeordnet.

Die Rührorganvorrichtung weist eine um die Rotationsachse 14a zentrierte Rotationswelle 20a auf. Das innere Rührblatt 10a kontaktiert auf einer Längsseite die Rotationswelle 20a entlang einer Längsrichtung der Rotationswelle 20a. Die Kontaktierung ist unterbrechungsfrei und erstreckt sich über die komplette Gesamterstreckung 36a des inneren Rührblatts 10a. Das korrespondierende innere Rührblatt 22a kontaktiert auf einer Längsseite die Rotationswelle 20a entlang einer Längsrichtung der Rotationswelle 20a.

Die Rührorganvorrichtung weist ein äußeres Rührblatt 12a und ein korrespondierendes äußeres Rührblatt 40a auf. Das äußere Rührblatt 12a ist vollständig in einem weiteren Teilbereich 30a um die Rotationsachse 14a angeordnet, welcher einem weiteren Zylindersektor 32a mit einem Kreissektor von weniger als 360° als Grundfläche entspricht. Das äußere Rührblatt 12a und das korrespondierende äußere Rührblatt 40a weisen in eine Radialrichtung 48a einen größeren Abstand von der Rotationsachse 14a auf als das innere Rührblatt 10a und/oder das korrespondierende innere Rührblatt 22a.

Das äußere Rührblatt 12a ist relativ zur Rotationsachse 14a angestellt. Das korrespondierende äußere Rührblatt 40a ist relativ zur Rotationsachse 14a angestellt. Ein kleinster Anstellwinkel des äußeren Rührblatts 12a und des korrespondierenden äußeren Rührblatts 40a beträgt 30°. Das äußere Rührblatt 12a und das korrespondierende äußere Rührblatt 40a sind als um die Rotationsachse 14a zentrierte Helices ausgebildet (vgl. Fig. 4). Das äußere Rührblatt 12a und das korrespondierende äußere Rührblatt 40a sind als linksgängige Helices ausgebildet. Das äußere Rührblatt 12a weist eine Ganghöhe auf, die mindestens viermal so groß ist wie eine Gesamterstreckung 80a des äußeren Rührblatts 12a parallel zu der Rotationsachse 14a (vgl. Fig. 2). Das korrespondierende äußere Rührblatt 40a weist eine identische Ganghöhe auf wie das äußere Rührblatt 12a. Das korrespondierende äußere Rührblatt 40a ist identisch zu dem äußeren Rührblatt 12a ausgebildet und um die Rotationsachse 14a um 180° rotiert versetzt angeordnet.

Die Rührorganvorrichtung weist einen Tragarm 28a auf. Der Tragarm 28a ist an der Rotationswelle 20a angeordnet. Der Tragarm 28a und die Rotationswelle 20a sind rotationsfest miteinander verbunden. Das äußere Rührblatt 12a ist an dem Tragarm 28a angeordnet. Ein oberes Ende 82a des äußeren Rührblatts 12a ist mit dem Tragarm 28a drehfest verbunden. Die Rührorganvorrichtung weist einen korrespondierenden Tragarm 58a auf. Der korrespondierende Tragarm 58a ist an der Rotationswelle 20a angeordnet. Der korrespondierende Tragarm 58a und die Rotationswelle 20a sind rotationsfest miteinander verbunden. Das korrespondierende äußere Rührblatt 40a ist an dem korrespondierenden Tragarm 58a angeordnet. Ein oberes Ende 84a des korrespondierenden äußeren Rührblatts 40a ist mit dem korrespondierenden Tragarm 58a drehfest verbunden.

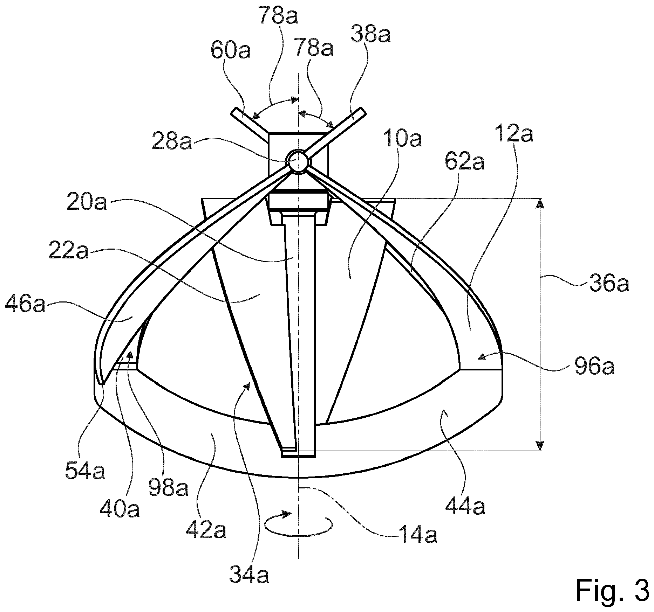

Die Rührorganvorrichtung weist ein Ankerelement 42a auf. Das Ankerelement 42a verbindet das äußere Rührblatt 12a mit dem korrespondierenden äußeren Rührblatt 40a. Das Ankerelement 42a ist fest mit einem unteren Ende 96a des äußeren Rührblatts 12a und mit einem unteren Ende 98a des korrespondierenden äußeren Rührblatts 40a verbunden (vgl. Fig. 3). Das Ankerelement 42a weist eine Ankerrührfläche 44a und eine korrespondierende Ankerrührfläche 64a auf. Die Ankerrührfläche 44a und die korrespondierende Ankerrührfläche 64a sind senkrecht relativ zu der Rotationsachse 14a ausgerichtet. Die Ankerrührflächen 44a, 64a sind dazu vorgesehen im Rotationsbetrieb ein zu mischendes Medium vor sich her zu schieben. Die Rotationswelle 20a kontaktiert das Ankerelement 42a. Die Rotationswelle 20a ist fest mit dem Ankerelement 42a verbunden.

Die Rührorganvorrichtung weist ein weiteres äußeres Rührblatt 46a und ein korrespondierendes weiteres äußeres Rührblatt 62a auf. Das weitere äußere Rührblatt 46 und das korrespondierende weitere äußere Rührblatt 62 weisen in eine Radialrichtung 48 einen größeren Abstand von der Rotationsachse 14a auf als das äußere Rührblatt 12a und/oder das korrespondierende äußere Rührblatt 40a. Das weitere äußere Rührblatt 46a und das korrespondierende weitere äußere Rührblatt 62a weisen ein zu einer Spitze zulaufendes freies Ende 54a auf.

Das weitere äußere Rührblatt 46a ist relativ zur Rotationsachse 14a angestellt. Das weitere korrespondierende äußere Rührblatt 62a ist relativ zur Rotationsachse 14a angestellt. Ein kleinster Anstellwinkel des weiteren äußeren Rührblatts 46a und des weiteren korrespondierenden äußeren Rührblatts 62a beträgt 35°. Das weitere äußere Rührblatt 46a und das korrespondierende weitere äußere Rührblatt 62a sind als um die Rotationsachse 14a zentrierte Helices ausgebildet (vgl. Fig. 4). Das weitere äußere Rührblatt 46a und das korrespondierende weitere äu-βere Rührblatt 62a sind als rechtsgängige Helices ausgebildet. Das weitere äußere Rührblatt 46a weist eine Ganghöhe auf, die mindestens viermal, insbesondere wenigstens sechsmal, so groß ist wie eine Gesamterstreckung 80a des weiteren äußeren Rührblatts 46a parallel zu der Rotationsachse 14a (vgl. Fig. 2). Das korrespondierende weitere äußere Rührblatt 62a weist eine identische Ganghöhe auf wie das weitere äußere Rührblatt 46a. Das korrespondierende weitere äußere Rührblatt 62a ist identisch zu dem weiteren äußeren Rührblatt 46a ausgebildet und um die Rotationsachse 14a um 180° rotiert versetzt angeordnet.

Das weitere äußere Rührblatt 46a ist an dem Tragarm 28a angeordnet. Ein oberes Ende 86a des weiteren äußeren Rührblatts 46a ist mit dem Tragarm 28a drehfest verbunden. Das korrespondierende weitere äußere Rührblatt 62a ist an dem korrespondierenden Tragarm 58a angeordnet. Ein oberes Ende 88a des korrespondierenden weiteren äußeren Rührblatts 62a ist mit dem korrespondierenden Tragarm 58a drehfest verbunden.

Entlang der Rotationsachse 14a betrachtet weisen das äußere Rührblatt 12a und das korrespondierende äußere Rührblatt 40a eine der Krümmungsrichtung des weiteren äußeren Rührblatts 46a und des korrespondierenden weiteren äußeren Rührblatts 62a entgegengesetzte Krümmungsrichtung auf.

Die Rührorganvorrichtung weist ein Oberflächenrührblatt 38a auf. Die Rührorganvorrichtung weist ein korrespondierendes Oberflächenrührblatt 60a auf. Das Oberflächenrührblatt 38a und/oder das korrespondierende Oberflächenrührblatt 60a sind in zumindest einem Betriebszustand vollständig oberhalb des inneren Rührblatts 10a und/oder des korrespondierenden inneren Rührblatts 22a angeordnet. Das Oberflächenrührblatt 38a und/oder das korrespondierende Oberflächenrührblatt 60a sind in einem Betriebszustand vollständig oberhalb des äußeren Rührblatts 12a und/oder des korrespondierenden äußeren Rührblatts 40a angeordnet.

Das Oberflächenrührblatt 38a ist relativ zur Rotationsachse 14a angestellt. Das korrespondierende Oberflächenrührblatt 60a ist relativ zur Rotationsachse 14a angestellt. Ein Winkel 78a zwischen einer Flächentangente des Oberflächenrührblatts 38a und des korrespondierenden Oberflächenrührblatts 60a beträgt 55°. Das Oberflächenrührblatt 38a und das korrespondierende Oberflächenrührblatt 60a sind eben, insbesondere krümmungsfrei, ausgebildet.

Das Oberflächenrührblatt 38a ist mit dem Tragarm 28a an einem unteren Ende 90a des Oberflächenrührblatts 38a verbunden. Das korrespondierende Oberflächenrührblatt 60a ist mit dem korrespondierenden Tragarm 58a an einem unteren Ende 92a des korrespondierenden Oberflächenrührblatts 60a verbunden. Das Oberflächenrührblatt 38a und/oder das korrespondierende Oberflächenrührblatt 60a sind austauschbar ausgebildet, wodurch vorteilhaft eine Anpassbarkeit einer Erstreckung 94a des Oberflächenrührblatts 38a und/oder des korrespondierenden Oberflächenrührblatts 60a parallel zu der Rotationsachse 14a an einen Füllstand eines zu mischenden Mediums ermöglicht werden kann.

Das innere Rührblatt 10a, das korrespondierende innere Rührblatt 22a, das äußere Rührblatt 12a und das korrespondierende äußere Rührblatt 40a sind um die gemeinsame Rotationsachse 14a rotierbar. Das innere Rührblatt 10 und das äu-βere Rührblatt 12a weisen im Rotationsbetrieb identische Winkelgeschwindigkeiten auf. Das weitere äußere Rührblatt 46a und das korrespondierende weitere äußere Rührblatt 62a sind um die gemeinsame Rotationsachse 14a rotierbar. Das Oberflächenrührblatt 38a und das korrespondierende Oberflächenrührblatt 60a sind um die gemeinsame Rotationsachse 14a rotierbar. Jedes der Rührblätter 10a, 12a, 38a, 40a, 46a, 60a, 62a weist im Rotationsbetrieb eine identische Winkelgeschwindigkeit auf.

Das innere Rührblatt 10a und das korrespondierende innere Rührblatt 22a überstreichen bei einer Rotation jeweils einen Bereich eines Zylindervolumens 74a. Das äußere Rührblatt 12a und das korrespondierende äußere Rührblatt 40a überstreichen bei einer Rotation jeweils einen Bereich eines Hohlzylinderwandvolumens 76a. Das weitere äußere Rührblatt 46a und das korrespondierende weitere äußere Rührblatt 62a überstreichen bei einer Rotation jeweils einen Bereich eines weiteren Volumens 100a. Das Zylindervolumen 74a, das Hohlzylinderwandvolumen 76a und das weitere Volumen 100a sind gegenseitig überlappungsfrei.

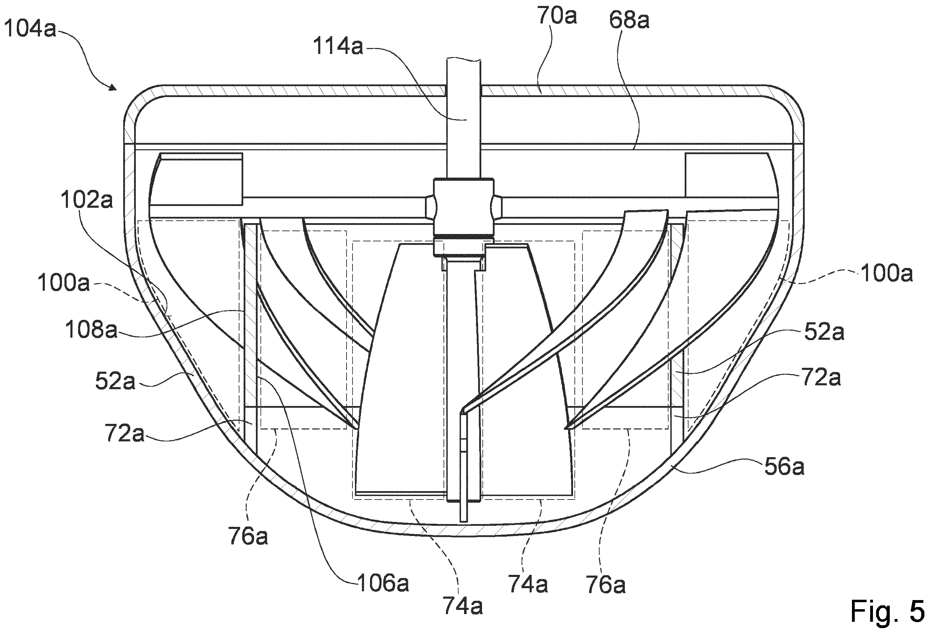

Der durch das äußere Rührblatt 12a bei dem Rotationsbetrieb überstrichene Bereich des Hohlzylinderwandvolumens 76a und der durch das weitere äußere Rührblatt 46a bei einem Rotationsbetrieb überstrichene Bereich des Hohlzylinderwandvolumens 76a sind unter Ausbildung eines Zwischenraums 50a radial voneinander beabstandet. Der Zwischenraum 50a ist zu einer Aufnahme eines Heiz- und/oder Kühlregisters 52a vorgesehen (vgl. Fig. 5).

Fig. 5 zeigt schematisch ein System 104a mit der Rührorganvorrichtung, einer Antriebswelle 114a, einem Heiz- und/oder Kühlregister 52a und einem Behälter 56a. Der Behälter 56a und das Heiz- und/oder Kühlregister 52a sind geschnitten dargestellt. Der Behälter 56a weist einen Deckel 70a auf. Der Behälter 56a umgreift die Rührorganvorrichtung vollständig. Eine innere Form des Behälters 56a ist an einen durch die Rührorganvorrichtung bei dem Rotationsbetrieb ausgebildeten Rotationskörper, unter Minimierung eines Abstands einer Innenwand 102a des Behälters 56a von dem Rotationskörper, angepasst. Der Behälter 56a weist eine Füllstandmarkierung 68 auf. Die Füllstandmarkierung 68a zeigt eine in einem Betrieb vorgesehene Füllmenge an. Die Erstreckung 94a des Oberflächenrührblatts 38a ist an die im Betrieb vorgesehene Füllmenge angepasst. Die Antriebswelle 114a ist mit der Rotationswelle 20a drehfest verbunden. Die Antriebswelle 114a ist dazu vorgesehen eine Rotationsbewegung auf die Rotationswelle 20a zu übertragen. Die Antriebswelle 114a ist mittels einer externen Antriebseinheit (nicht gezeigt) angetrieben.

Das System 104a weist das Heiz- und/oder Kühlregister 52a auf. Das Heiz- und/oder Kühlregister 52a ist innerhalb des Behälters 56a angeordnet. Das Heiz- und/oder Kühlregister 52a ist radialsymmetrisch ausgebildet. Das Heiz- und/oder Kühlregister 52a ist als ein Hohlzylinder ausgebildet. Das Heiz- und/oder Kühlregister 52a ist durch Verbindungsstücke 72a an der Innenwand 102a gelagert. Zumindest ein Verbindungsstück 72a weist zumindest eine Zu- und/oder Ableitung (nicht gezeigt) für zumindest ein Kühl- und/oder Heizmittel auf.

In einem Rotationsbetrieb ist die Rührorganvorrichtung dazu vorgesehen bei einer Ansicht von oben, wie beispielsweise in Fig. 1 gezeigt, im Uhrzeigersinn zu rotieren. Dabei erzeugen das innere Rührblatt 10a und das korrespondierende innere Rührblatt 22a in dem zu mischenden Medium eine Strömung mit einer parallel zur Rotationsachse 14a nach unten gerichteten Strömungskomponente. Das äußere Rührblatt 12a und das korrespondierende äußere Rührblatt 40a erzeugen in dem zu mischenden Medium im Rotationsbetrieb eine Strömung mit einer parallel zur Rotationsachse 14a nach unten gerichteten Strömungskomponente. Das weitere äußere Rührblatt 46a und das korrespondierende weitere äußere Rührblatt 62a erzeugen in dem zu mischenden Medium im Rotationsbetrieb eine Strömung mit einer parallel zur Rotationsachse 14a nach oben gerichteten Strömungskomponente.

Das äußere Rührblatt 12a und zumindest das weitere äußere Rührblatt 46a umkreisen in einem Betriebszustand das Heiz- und/oder Kühlregister 52a auf zwei voneinander verschiedenen Seiten des Heiz- und/oder Kühlregisters 52a. Das weitere äußere Rührblatt 46a beschreibt einen Umkreis um eine Außenseite 108a des Heiz- und/oder Kühlregisters 52a. Das äußere Rührblatt 12a beschreibt einen Inkreis um eine Innenseite 106a des Heiz- und/oder Kühlregisters 52a.

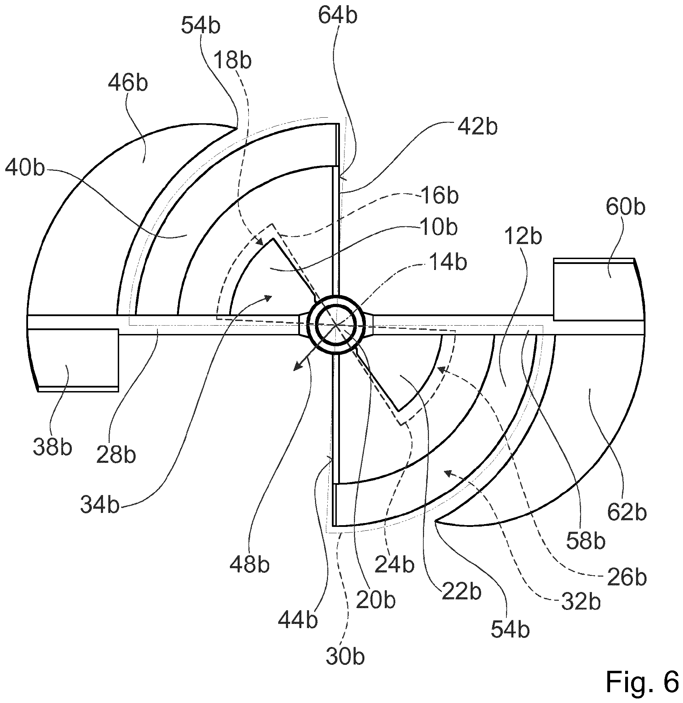

In den Figuren 6 bis 11 sind vier weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 5, verwiesen werden kann. Zur Unterscheidung der Ausführungsbeispiele ist der Buchstabe a den Bezugszeichen des Ausführungsbeispiels in den Figuren 1 bis 5 nachgestellt. In den Ausführungsbeispielen der Figuren 6 bis 8 ist der Buchstabe a durch die Buchstaben b bis e ersetzt.

Fig. 6 zeigt eine schematische Draufsicht auf eine alternative Rührorganvorrichtung mit einem inneren Rührblatt 10b, einem korrespondierenden inneren Rührblatt 22b, einem äußeren Rührblatt 12b, einem korrespondierendem äußeren Rührblatt 40b, einem weiteren äußeren Rührblatt 46b und einem korrespondierendem weiteren äußeren Rührblatt 62b. Das innere Rührblatt 10b ist vollständig in einem Teilbereich 16b um die Rotationsachse 14b angeordnet, welcher einem Zylindersektor 18b mit einem Kreissektor von weniger als 360° als Grundfläche entspricht. Das korrespondierende innere Rührblatt 22b ist vollständig in einem korrespondierenden Teilbereich 24b um die Rotationsachse 14b angeordnet, welcher einem korrespondierenden Zylindersektor 26b mit einem korrespondierenden Kreissektor von weniger als 360° als Grundfläche entspricht. Das äußere Rührblatt 12b ist vollständig in einem weiteren Teilbereich 30b um die Rotationsachse 14b angeordnet, welcher einem weiteren Zylindersektor 32b mit einem Kreissektor von weniger als 360° als Grundfläche entspricht.

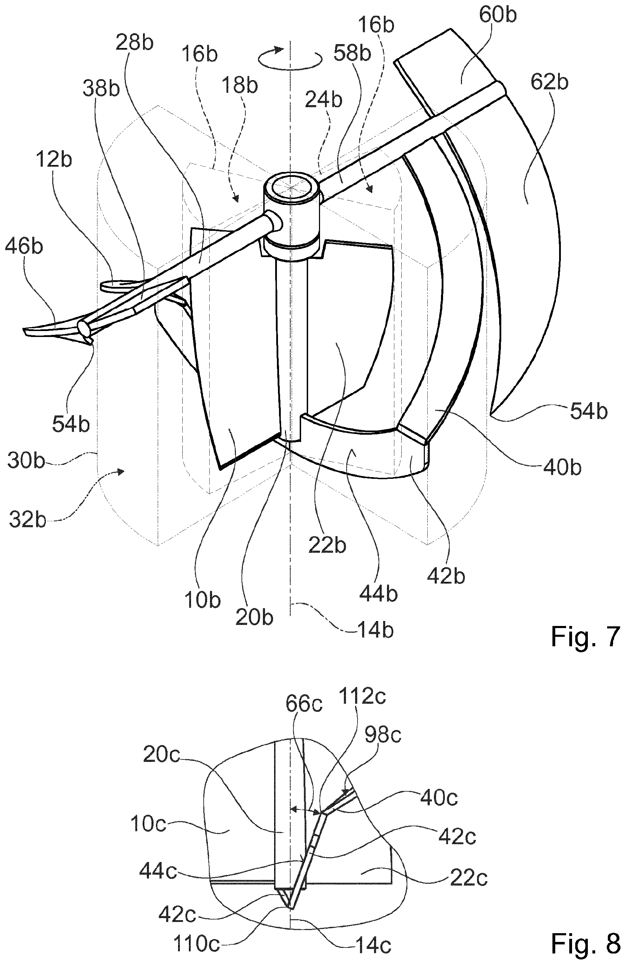

Der Teilbereich 16b und der weitere Teilbereich 30b überschneiden sich teilweise. Das innere Rührblatt 10b und das äußere Rührblatt 12b sind unterschiedlich gekrümmt. Das äußere Rührblatt 12b und das korrespondierende äußere Rührblatt 40b weisen jeweils eine Gängigkeit auf, welche identisch ist mit einer Gängigkeit des weiteren äußeren Rührblatts 46b und des korrespondierenden weiteren Rührblatts 62b (vgl. Fig. 7). Das äußere Rührblatt 12b und das korrespondierende äu-ßere Rührblatt 40b sind, insbesondere in einer seitlichen Ansicht einer betriebsbereiten Aufstellrichtung gesehen, rechtsgekrümmt. Das innere Rührblatt 10b und das korrespondierende innere Rührblatt 22b sind, insbesondere in einer seitlichen Ansicht einer betriebsbereiten Aufstellrichtung gesehen, linksgekrümmt.

Fig. 8 zeigt einen Ausschnitt einer schematischen seitlichen Ansicht eines Ankerelements 42c einer weiteren alternativen Rührorganvorrichtung. Das Ankerelement 42c weist eine Ankerrührfläche 44c auf, welche relativ zu der Rotationsachse 14c angewinkelt ausgerichtet ist. Das Ankerelement 42c und die Rotationsachse 14c spannen einen Winkel 66c auf. In einem Rotationsbetrieb läuft eine untere Kante 110c des Ankerelements 42c einer oberen Kante 112c des Ankerelements 42c voraus. Dadurch können vorteilhaft weiter verbesserte Mischeigenschaften der Rührorganvorrichtung erzielt werden. Vorzugsweise ist ein Teil des Ankerelements 42c welcher vollständig in einem Halbraum auf einer Seite einer Rotationswelle 20c angeordnet ist entgegengesetzt angewinkelt im Vergleich zu einem gegenüberliegenden Teil des Ankerelements 42c, welches vollständig auf einem von dem Halbraum verschiedenen Halbraum angeordnet ist, so dass bei dem Rotationsbetrieb die untere Kante 110c in jedem Teil des Ankerelements 42c der oberen Kante 112c vorausläuft.

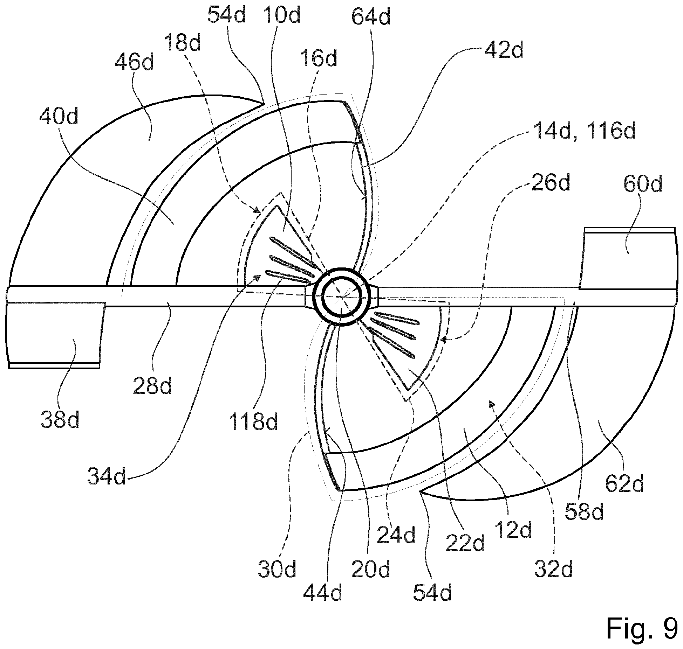

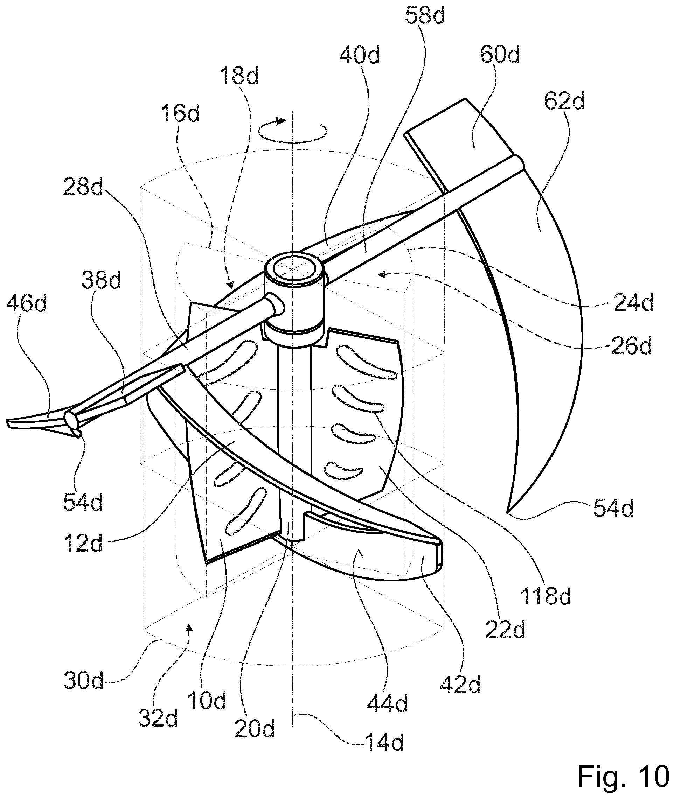

Fig. 9 und Fig. 10 zeigen eine weitere alternative Rührorganvorrichtung. Das Ankerelement 42d ist entlang seiner Haupterstreckungsrichtung gekrümmt. Das Ankerelement 42d ist s-förmig gekrümmt. Eine Krümmung des Ankerelements 42d weist einen Wendepunkt 116d auf. Das innere Rührblatt 10d und das korrespondierende innere Rührblatt 22d weisen jeweils vier Ausnehmungen 118d auf. Die Ausnehmungen 118d weisen jeweils ein gekrümmtes Loch des inneren Rührblatts oder des korrespondierenden inneren Rührblatts 22d auf. Die Ausnehmungen 118d sind periodisch angeordnet.

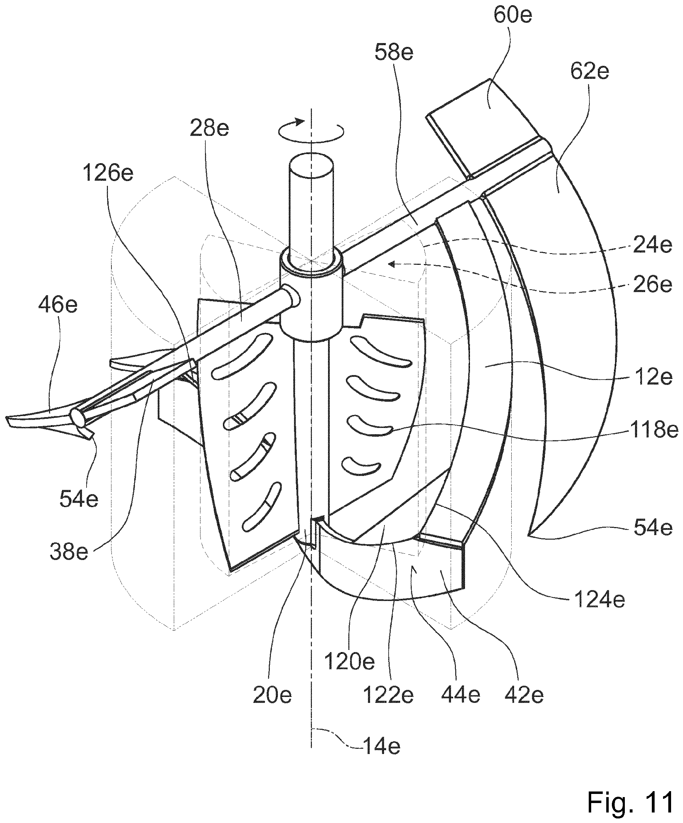

Fig. 11 zeigt eine weitere alternative Rührorganvorrichtung. Die Rührorganvorrichtung weist ein Schaufelelement 120e auf. Das Schaufelelement 120e ist an einem maximal von der Rotationsachse 14e beabstandeten Teilbereich des Ankerelements 42e angeordnet. Das Schaufelelement 120e ist plattenartig ausgebildet. Das Schaufelelement 120e weist eine senkrecht zu einer Haupterstreckungsebene (nicht dargestellt) des Ankerelements 42e verlaufende weitere Haupterstreckungsebene (nicht dargestellt) auf. Das Schaufelelement 120e ist als ein zumindest im Wesentlichen dreieckiges Blech ausgebildet. Das Schaufelelement 120e ist mit dem Ankerelement 42e verbunden. Das Schaufelelement 120e ist mit einem zu der Rotationsachse 14e hin gekrümmten Rand des Ankerelements 42e verbunden. Das Schaufelelement 120e ist mit dem äußeren Rührblatt 12e verbunden. Das Schaufelelement 120e ist an einer ersten Seite 122e vollständig mit dem Ankerelement 42e verschweißt. Das Schaufelelement 120e ist an einer zweiten Seite 124e vollständig mit dem äußeren Rührblatt 12e verschweißt. Die Rührorganvorrichtung weist ein weiteres Schaufelelement 126e auf. Das weitere Schaufelelement 126e ist an einem gegenüberliegenden Rand des Ankerelements 42e angeordnet. Das weitere Schaufelelement 126e ist mit dem korrespondierenden äußeren Rührblatt 40e verbunden. Das weitere Schaufelelement 126e ist bezüglich seiner anderen Eigenschaften identisch zum Schaufelelement 120e ausgebildet, weshalb an dieser Stelle auf eine weitere Beschreibung des weiteren Schaufelelements 126e verzichtet wird.

### Bezugszeichen

- 10: Inneres Rührblatt
- 12: Äußeres Rührblatt
- 14: Rotationsachse
- 16: Teilbereich
- 18: Zylindersektor
- 20: Rotationswelle
- 22: Korrespondierendes inneres Rührblatt
- 24: Korrespondierender Teilbereich
- 26: Korrespondierender Zylindersektor
- 28: Tragarm
- 30: Weiterer Teilbereich
- 32: Weiterer Zylindersektor
- 34: Schraube
- 36: Gesamterstreckung
- 38: Oberflächenrührblatt
- 40: Korrespondierendes äußeres Rührblatt
- 42: Ankerelement
- 44: Ankerrührfläche
- 46: Weiteres äußeres Rührblatt
- 48: Radialrichtung
- 50: Zwischenraum
- 52: Heiz- und/oder Kühlregister
- 54: Freies Ende
- 56: Behälter
- 58: Korrespondierender Tragarm
- 60: Korrespondierendes Oberflächenrührblatt
- 62: Korrespondierendes weiteres äußeres Rührblatt
- 64: Korrespondierende Ankerrührfläche
- 66: Winkel
- 68: Füllstandmarkierung
- 70: Deckel
- 72: Verbindungsstück
- 74: Zylindervolumen
- 76: Hohlzylinderwandvolumen
- 78: Winkel
- 80: Gesamterstreckung
- 82: Oberes Ende
- 84: Oberes Ende
- 86: Oberes Ende
- 88: Oberes Ende
- 90: Unteres Ende
- 92: Unteres Ende
- 94: Erstreckung
- 96: Unteres Ende
- 98: Unteres Ende
- 100: Weiteres Volumen
- 102: Innenwand
- 104: System
- 106: Innenseite
- 108: Außenseite
- 110: Untere Kante
- 112: Obere Kante
- 114: Antriebswelle
- 116: Wendepunkt
- 118: Ausnehmung
- 120: Schaufelelement
- 122: Seite
- 124: Seite
- 126: Schaufelelement

## Patentansprüche

1. Rührorganvorrichtung, insbesondere zum Mischen von Medien in einem breiten Viskositätsbereich, insbesondere für einen PolykondensationsReaktor, mit zumindest einem inneren Rührblatt (10a-e) und zumindest einem äußeren Rührblatt (12a-e), welche um eine gemeinsame Rotationsachse (14a-e) rotierbar sind, wobei zumindest das innere Rührblatt (10a-e) zumindest abschnittsweise relativ zur Rotationsachse (14a-e) angestellt und zumindest teilweise als eine um die Rotationsachse (14a-e) zentrierte Schraube (34a-e) ausgebildet ist, wobei zumindest das innere Rührblatt (10a-e) vollständig in einem Teilbereich (16a-e) um die Rotationsachse (14a-e) angeordnet ist, welcher einem Zylindersektor (18a-e) mit einem Kreissektor von weniger als 360° als Grundfläche entspricht, mit zumindest einem korrespondierenden inneren Rührblatt (22a-e), welches vollständig in einem korrespondierenden Teilbereich (24a-e) um die Rotationsachse (14a-e) angeordnet ist, welcher einem korrespondierenden Zylindersektor (26a-e) mit einem Kreissektor als Grundfläche entspricht, wobei der Teilbereich (16a-e) und der korrespondierende Teilbereich (24a-e) überlappungsfrei sind, und mit zumindest einem weiteren äußeren Rührblatt (46a-e), welches in Radialrichtung (48a-e) einen größeren Abstand von der Rotationsachse (14a-e) aufweist als das äußere Rührblatt (12a-e), **dadurch gekennzeichnet, dass** das weitere äußere Rührblatt (46a-e) ein zu einer Spitze zulaufendes freies Ende (54a-e) aufweist.

2. Rührorganvorrichtung nach Anspruch 1, **gekennzeichnet durch** eine um die Rotationsachse (14a-e) zentrierte Rotationswelle (20a-e), welche zumindest abschnittsweise das innere Rührblatt (10a-e) entlang einer Längsrichtung der Rotationswelle (20a-e) kontaktiert.

3. Rührorganvorrichtung nach einem der vorhergehenden Ansprüche,
**dadurch gekennzeichnet, dass** das äußere Rührblatt (12a-e) vollständig in einem weiteren Teilbereich (30a-e) um die Rotationsachse (14a-e) angeordnet ist, welcher einem weiteren Zylindersektor (32a-e) mit einem Kreissektor von weniger als 360° als Grundfläche entspricht.

4. Rührorganvorrichtung nach einem der vorhergehenden Ansprüche,
**dadurch gekennzeichnet, dass** das innere Rührblatt (10a-e) und das äußere Rührblatt (12a-e) in zumindest einem Rotationsbetrieb identische Winkelgeschwindigkeiten aufweisen.

5. Rührorganvorrichtung nach einem der vorhergehenden Ansprüche,
**dadurch gekennzeichnet, dass** das innere Rührblatt (10b; 10c; 10d; 10e) und das äußere Rührblatt (12b; 12c; 12d; 12e) unterschiedlich gekrümmt sind.

6. Rührorganvorrichtung nach einem der vorhergehenden Ansprüche,
**dadurch gekennzeichnet, dass** das innere Rührblatt (10a-e) eine Ganghöhe aufweist, welche wenigstens dreimal so groß ist wie eine Gesamterstreckung (36a-e) des inneren Rührblatts (10a-e) parallel zu der Rotationsachse (14a-e).

7. Rührorganvorrichtung nach einem der vorhergehenden Ansprüche, **gekennzeichnet durch** zumindest ein Oberflächenrührblatt (38a-e), welches in zumindest einem Betriebszustand zumindest teilweise, oberhalb des äußeren Rührblatts (12a-e) angeordnet ist.

8. Rührorganvorrichtung nach einem der vorhergehenden Ansprüche, **gekennzeichnet durch** zumindest ein korrespondierendes äußeres Rührblatt (40a-e) und zumindest ein Ankerelement (42a-e), welches zumindest das äußere Rührblatt (12a-e), mit dem korrespondierenden äußeren Rührblatt (40a-e) verbindet, wobei das Ankerelement (42a-e) eine Ankerrührfläche (44a-e) aufweist, welche relativ zu der Rotationsachse (14a-e) ausgerichtet ist.

9. Rührorganvorrichtung zumindest nach den Ansprüchen 2 und 8, **dadurch gekennzeichnet, dass** die Rotationswelle (20a-e) das Ankerelement (42a-e) kontaktiert und fest mit dem Ankerelement (42a-e) verbunden ist.

10. Rührorganvorrichtung nach einem der vorhergehenden Ansprüche,
**dadurch gekennzeichnet, dass** entlang der Rotationsachse (14a; 14c; 14e) betrachtet das äußere Rührblatt (12a; 12c; 12e) eine der Krümmungsrichtung des weiteren äußeren Rührblatts (46a; 46c; 46e) entgegengesetzte Krümmungsrichtung aufweist.

11. Rührorganvorrichtung nach einem der vorhergehenden Ansprüche,
**dadurch gekennzeichnet, dass** ein durch das äußere Rührblatt (12a-e) bei einem Rotationsbetrieb überstrichener Bereich und ein durch das weitere äußere Rührblatt (46a-e) bei einem Rotationsbetrieb überstrichener weiterer Bereich, unter Ausbildung eines Zwischenraums (50a-e), welcher zur Aufnahme eines Heiz- und/oder Kühlregisters (52a-e) vorgesehen ist, radial voneinander beabstandet sind.

12. Rührorganvorrichtung nach einem der vorhergehenden Ansprüche,
**dadurch gekennzeichnet, dass** das innere Rührblatt (10d) zumindest eine Ausnehmung aufweist.

13. Rührorganvorrichtung zumindest nach Anspruch 8, **dadurch gekennzeichnet, dass** das Ankerelement (42d) entlang seiner Haupterstreckungsrichtung gekrümmt ist.

14. Rührorganvorrichtung zumindest nach Anspruch 8, **gekennzeichnet durch** zumindest ein am Ankerelement (42e) und/oder am äußeren Rührblatt (12e) angeordnetes Schaufelelement (120e).

15. System (104a), insbesondere Rühr- und/oder Reaktorsystem, mit einer Rührorganvorrichtung nach einem der vorhergehenden Ansprüche und mit einem Behälter (56a), welcher die Rührorganvorrichtung zumindest teilweise umgreift.

16. System (104a), insbesondere Rühr- und/oder Reaktorsystem, mit einer Rührorganvorrichtung zumindest nach Anspruch 11 und mit einem Behälter (56a), welcher die Rührorganvorrichtung zumindest teilweise umgreift, **gekennzeichnet durch** das Heiz- und/oder Kühlregister (52a), wobei zumindest das äußere Rührblatt (12a) und zumindest das weitere äußere Rührblatt (46a) in zumindest einem Betriebszustand das Heiz- und/oder Kühlregister (52a) auf zumindest zwei voneinander verschiedenen Seiten umkreisen.

## Claims

1. Stirring element device, in particular for mixing media in a wide range of viscosities, in particular for a polycondensation reactor,
with at least one inner stirring blade (10a-e) and at least one outer stirring blade (12a-e) which are rotatable around a common axis of rotation (14a-e),
wherein at least the inner stirring blade (10a-e) is inclined at least section-wise relative to the axis of rotation (14a-e) and is at least partially formed as a screw (34a-e) centred around the axis of rotation (14a-e),
wherein at least the inner stirring blade (10a-e) is arranged entirely in a subregion (16a-e) around the axis of rotation (14a-e) which is equivalent to a cylinder sector (18a-e) with a circular sector of less than 360° as base area,
with at least one corresponding inner stirring blade (22a-e) arranged entirely in a corresponding subregion (24a-e) around the rotation axis (14a-e) which is equivalent to a corresponding cylinder sector (26a-e) with a circular sector as base area, wherein the subregion (16a-e) and the corresponding subregion (24a-e) do not overlap,
and with at least one further outer stirring blade (46a-e), which has in a radial direction (48a-e) a greater distance from the axis of rotation (14a-e) than the outer stirring blade (12a-e),
**characterised in that** the further outer stirring blade (46a-e) has a free end (54a-e) which tapers to a point.

2. Stirring element device according to claim 1,
**characterised by** a rotary shaft (20a-e) which is centred around the axis of rotation (14a-e) and which at least section-wise makes contact with the inner stirring blade (10a-e) along a longitudinal direction of the rotary shaft (20a-e).

3. Stirring element device according to one of the preceding claims,
**characterised in that** the outer stirring blade (12a-e) is arranged entirely in a further subregion (30a-e) around the axis of rotation (14a-e) which is equivalent to a further cylinder sector (32a-e) with a circular sector of less than 360° as base area.

4. Stirring element device according to one of the preceding claims,
**characterised in that** the inner stirring blade (10a-e) and the outer stirring blade (12a-e) have identical angular speeds in at least one rotation operation.

5. Stirring element device according to one of the preceding claims,
**characterised in that** the inner stirring blade (10b; 10c; 10d; 10e) and the outer stirring blade (12b; 12c; 12d; 12e) are curved differently.

6. Stirring element device according to one of the preceding claims,
**characterised in that** the inner stirring blade (10a-e) has a thread pitch which amounts to at least three times a total extent (36a-e) of the inner stirring blade (10a-e) parallel to the axis of rotation (14a-e).

7. Stirring element device according to one of the preceding claims,
**characterised by** at least one surface stirring blade (38a-e) which, in at least one operating state, is arranged at least partially above the outer stirring blade (12a-e).

8. Stirring element device according to one of the preceding claims,
**characterised by** at least one corresponding outer stirring blade (40a-e) and at least one anchor element (42a-e) which connects at least the outer stirring blade (12a-e) to the corresponding outer stirring blade (40a-e),
wherein the anchor element (42a-e) has an anchor stirring surface (44a-e) which is oriented relative to the axis of rotation (14a-e).

9. Stirring element device at least according to claims 2 and 8,
**characterised in that** the rotary shaft (20a-e) makes contact with the anchor element (42a-e) and is fixedly connected to the anchor element (42a-e).

10. Stirring element device according to one of the preceding claims,
**characterised in that** viewed along the axis of rotation (14a; 14c; 14e), the outer stirring blade (12a; 12c; 12e) has a curvature direction opposed to the curvature direction of the further outer stirring blade (46a; 46c; 46e).

11. Stirring element device according to one of the preceding claims,
**characterised in that** a region swept over by the outer stirring blade (12a-e) in a rotation operation and a further region swept over by the further outer stirring blade (46a-e) in a rotation operation are radially spaced apart from one another, forming an intermediate space (50a-e) which is configured for receiving a heating and/or cooling register (52a-e).

12. Stirring element device according to one of the preceding claims,
**characterised in that** the inner stirring blade (10d) has at least one recess.

13. Stirring element device at least according to claim 8,
**characterised in that** the anchor element (42d) is curved along its main extent direction.

14. Stirring element device at least according to claim 8,
**characterised by** at least one vane element (120e) which is arranged on the anchor element (42e) and/or on the outer stirring blade (12e).

15. System (104a), in particular stirring and/or reactor system,
with a stirring element device according to the preceding claims and with a vessel (56a) which at least partially engages around the stirring element device.

16. System (104a), in particular stirring and/or reactor system,
with a stirring element device at least according to claim 11 and with a vessel (56a) which at least partially engages around the stirring element device,
**characterized by** the heating and/or cooling register (52a),
wherein at least the outer stirring blade (12a) and at least the further outer stirring blade (46a) circulate around the heating and/or cooling register (52a) on at least two mutually different sides in at least one operating state.

## Revendications

1. Dispositif d'organe d'agitation, en particulier pour le mélange des médiums en large gamme de viscosité, en particulier pour un réacteur à polycondensation, avec au moins une pale d'agitation intérieure (10a-e) et au moins une pale d'agitation extérieure (12a-e) qui peuvent être tournées autour d'un axe rotatif commun (14a-e),
où au moins la pale d'agitation intérieure (10a-e) est au moins par sections inclinée par rapport à l'axe rotatif (14a-e) et est réalisée au moins partiellement comme hélice (34a-e) centrée autour de l'axe rotatif (14a-e),
où au moins la pale d'agitation intérieure (10a-e) est disposée entièrement dans une sous-partie (16a-e) autour de l'axe rotatif (14a-e) qui corresponde à un secteur de cylindre (18a-e) ayant un secteur circulaire de moins de 360° comme surface de base,
avec au moins une pale d'agitation intérieure correspondante (22a-e) disposée entièrement dans une sous-partie correspondante (24a-e) autour de l'axe rotatif (14a-e) qui corresponde à un secteur de cylindre correspondant (26a-e) ayant un secteur circulaire comme surface de base,
la sous-partie (16a-e) et la sous-partie correspondante (24a-e) étant libres de chevauchement,
et avec au moins une pale d'agitation extérieure de plus (46a-e) ayant en direction radiale (48a-e) un écart de l'axe rotatif (14a-e) plus grand que la pale d'agitation extérieure (12a-e),
**caractérisé en ce que** la pale d'agitation extérieure de plus (46a-e) comporte une extrémité libre (54a-e) rétrécissant dans une pointe.

2. Dispositif d'organe d'agitation selon la revendication 1,
**caractérisé par** un arbre de rotation (20a-e) centré autour de l'axe rotatif (14a-e), qui contacte au moins par sections la pale d'agitation intérieure (10a-e) le long d'une direction longitudinale de l'arbre de rotation (20a-e).

3. Dispositif d'organe d'agitation selon l'une des revendications précédentes,
**caractérisé en ce que** la pale d'agitation extérieure (12a-e) est disposée entièrement dans une sous-partie de plus (30a-e) autour de l'axe rotatif (14a-e) qui corresponde à un secteur de cylindre de plus (32a-e) ayant un secteur circulaire de moins de 360° comme surface de base.

4. Dispositif d'organe d'agitation selon l'une des revendications précédentes,
**caractérisé en ce que** dans au moins un fonctionnement-rotation, la pale d'agitation intérieure (10a-e) et la pale d'agitation extérieure (12a-e) ont des vitesses angulaires identiques.

5. Dispositif d'organe d'agitation selon l'une des revendications précédentes,
**caractérisé en ce que** la pale d'agitation intérieure (10b ; 10c ; 10d ; 10e) et la pale d'agitation extérieure (12b ; 12c ; 12d ; 12e) ont des courbatures différentes.

6. Dispositif d'organe d'agitation selon l'une des revendications précédentes,
**caractérisé en ce que** la pale d'agitation intérieure (10a-e) comporte un pas qui est au moins trois fois plus grand qu'une étendue totale (36a-e) de la pale d'agitation intérieure (10a-e) en parallèle à l'axe rotatif (14a-e).

7. Dispositif d'organe d'agitation selon l'une des revendications précédentes,
**caractérisé par** au moins une pale d'agitation de surface (38a-e) qui est disposée dans au moins un état de fonctionnement au moins partiellement au-dessus de la pale d'agitation extérieure (12a-e).

8. Dispositif d'organe d'agitation selon l'une des revendications précédentes,
**caractérisé par** au moins une pale d'agitation extérieure correspondante (40a-e) et au moins un élément d'ancre (42a-e) reliant au moins la pale d'agitation extérieure (12a-e) à la pale d'agitation extérieure correspondante (40a-e),
où l'élément d'ancre (42a-e) comprend une surface d'agitation d'ancre (44a-e) orientée par rapport à l'axe rotatif (14a-e).

9. Dispositif d'organe d'agitation au moins selon les revendications 2 et 8,
**caractérisé en ce que** l'arbre de rotation (20a-e) contacte l'élément d'ancre (42a-e) et est fixement relié avec l'élément d'ancre (42a-e).

10. Dispositif d'organe d'agitation selon l'une des revendications précédentes,
**caractérisé en ce que** vue le long de l'axe rotatif (14a ; 14c ; 14e), la pale d'agitation extérieure (12a ; 12c ; 12e) a un sens de courbature opposé au sens de courbature de la pale d'agitation extérieure de plus (46a ; 46c ; 46e).

11. Dispositif d'organe d'agitation selon l'une des revendications précédentes,
**caractérisé en ce qu'**une zone balayée par la pale d'agitation extérieure (12a-e) dans un fonctionnement-rotation et une zone de plus balayée par la pale d'agitation extérieure de plus (46a-e) dans un fonctionnement-rotation sont radialement écartées l'une de l'autre en formant un interstice (50a-e) prévu pour recevoir une batterie de chauffage et/ou de refroidissement (52a-e).

12. Dispositif d'organe d'agitation selon l'une des revendications précédentes,
**caractérisé en ce que** la pale d'agitation intérieure (10d) comporte au moins une échancrure.

13. Dispositif d'organe d'agitation au moins selon la revendication 8,
**caractérisé en ce que** l'élément d'ancre (42d) est courbé le long de son direction d'étendue principale.

14. Dispositif d'organe d'agitation au moins selon la revendication 8,
**caractérisé par** au moins un élément de palette (120e) disposé sur l'élément d'ancre (42e) et/ou sur la pale d'agitation extérieure (12e).

15. Système (104a), en particulier système d'agitation et/ou système réacteur, avec un dispositif d'organe d'agitation selon l'une des revendications précédentes et avec un récipient (56a) entourant le dispositif d'organe d'agitation au moins partiellement.

16. Système (104a), en particulier système d'agitation et/ou système réacteur, avec un dispositif d'organe d'agitation au moins selon la revendication 11 et avec un récipient (56a) entourant le dispositif d'organe d'agitation au moins partiellement,
**caractérisé par** la batterie de chauffage et/ou de refroidissement (52a), où dans au moins un état de fonctionnement, au moins la pale d'agitation extérieure (12a) et au moins la pale d'agitation extérieure de plus (46a) tournent autour de la batterie de chauffage et/ou de refroidissement (52a) sur au moins deux côtés qui diffèrent l'un de l'autre.
